# EUROPÄISCHE PATENTSCHRIFT

(11) **EP 1 615 087 B1**
(45) Veröffentlichungstag und Bekanntmachung des Hinweises auf die Patenterteilung: **05.11.2008**
(21) Anmeldenummer: 05014726.3
(22) Anmeldetag: 07.07.2005
(51) Int. Cl.: G05B 9/03

(54) **Steuer- und Regeleinheit**
Control and regulation unit
Unité de commande et de régulation

(30) Priorität: 09.07.2004 DE 102004033263
(43) Veröffentlichungstag der Anmeldung: 11.01.2006
(73) Patentinhaber: Diehl Aerospace GmbH, 88662 Überlingen (DE)
(72) Erfinder: Orth, Stefan, 35713 Eschenburg (DE)
(74) Vertreter: Diehl Patentabteilung

(56) Entgegenhaltungen:
- DE-A1- 3 209 718
- US-A- 4 667 284
- US-A1- 2004 117 102

## Beschreibung

Die Erfindung betrifft eine Steuer- und Regeleinheit für eine sicherheitsrelevante Vorrichtung, insbesondere in der Luftfahrt, nach dem Oberbegriff des Patentenspruchs 1.

Aus der US 4,667,284 ist eine solche Steuer- und Regeleinheit bekannt. Diese enthält mehrere vollständig voneinander getrennte und unabhängige Untereinheiten, die von einer Steuereinheit im Multiplex-Modus miteinander verglichen werden, wodurch die Sicherheit in der Ansteuerung einer sicherheitsrelevanten Vorrichtung erhöht werden soll.

Eine Fehlfunktion einer sicherheitsrelevanten Vorrichtung, wie zum Beispiel dem Auslösemechanismus der Notrutsche, dem Türschließmechanismus oder der Kabinendruckregelung in Luftfahrzeugen, dem Airbag-Auslösemechanismus oder dem Bremssystem in Straßenfahrzeugen oder dem Türschließmechanismus oder dem Bremssystem in Schienenfahrzeugen, kann zu Unfällen mit unabsehbaren Folgen führen. Auch ein fehlerhaftes Anzeigesystem zur Information eines Fahrzeugführers über den Betriebszustand, die Geschwindigkeit oder die Orientierung eines Fahrzeugs kann zu Fehleinschätzungen der gegebenen Situation und damit ebenfalls zu Unfällen mit vermeidbaren Folgen führen.

Um die Ausfallsicherheit einer Steuer- und Regeleinheit für eine derartige sicherheitsrelevante Vorrichtung zu verringern, ist es bekannt, die Steuer- und Regeleinheit redundant, d.h. mehrfach auszuführen. Fällt eine der redundant vorhandenen Steuer- und Regeleinheiten aus, so kann die andere, noch intakte Steuer- und Regeleinheit die Steuerung und Regelung der Vorrichtung weiterführen, ohne dass es zu einem Ausfall des Gesamtsystems kommt.

Eine redundant vorhandene Steuer- und Regeleinheit birgt aber durch das mehrfach Vorhandensein identischer Komponenten die Gefahr von so genannten Common-Mode-Fehlern. Unter einem Common-Mode-Fehler wird ein Fehler verstanden, der auf einer intrinsischen Eigenschaft einer Einzelkomponente beruht und der deshalb bei identischer Konfiguration und gleichen Ausgangsbedingungen bei jeder Einzelkomponente identisch auftritt. Solch intrinsische Fehler beruhen beispielsweise bei Prozessoren auf Programmierfehlern oder Designfehlern und bei Bauteilen auf Konstruktionsmängel oder baulichen Schwachstellen. Eine redundante Architektur führt deshalb nicht zur Eliminierung solcher Common-Mode-Fehler. Tritt ein solcher Fehler auf, so führt dies trotz redundanter Architektur zu einer Fehlfunktion des Gesamtsystems mit unabsehbaren Folgen.

Als Lösung zur Vermeidung von Common-Mode-Fehlern ist es bekannt, die mehrfach vorhandenen Komponenten einer redundanten Steuer- und Regeleinheit sowohl bezüglich ihrer Hardware als auch bezüglich ihrer Software unabhängig voneinander zu entwickeln. Auf diese Weise lassen sich identische Fehler durch Kopieren vermeiden. Für eine vollständige Vermeidung ist es aber erforderlich, die Entwicklung von unabhängigen Entwicklungsteams durchführen zu lassen. Nachteiligerweise ist eine solche Lösung aufgrund der mehrfachen Entwicklerleistungen sehr kostenintensiv.

Aufgabe der Erfindung ist es, eine Steuer- und Regeleinheit für eine sicherheitsrelevante Vorrichtung, insbesondere in der Luftfahrt, anzugeben, die kostengünstig ist und zudem eine niedrige Ausfallwahrscheinlichkeit durch Common-Mode-Fehler aufweist.

Diese Aufgabe wird erfindungsgemäß mit einer Steuer- und Regeleinheit gelöst, die eine Rechnereinheit mit einer Anzahl von Rechnereingängen und Rechnerausgängen und eine Schaltungseinheit mit einer Anzahl von Schaltungseingängen und Schaltungsausgängen aufweist, welche Schaltungseinheit mittels Hardwarekomponenten einen Teil der in der Rechnereinheit durchführbaren Logikoperationen nachbildet, wobei einander bezüglich der nachgebildeten Logikoperationen entsprechende Schaltungseingänge und Rechnereingänge jeweils parallel mit einer Signaleingangleitung verbunden sind, und wobei einander bezüglich der nachgebildeten Logikoperationen entsprechende Rechnerausgänge und Schaltungsausgänge jeweils mit einer Entscheidungseinheit verbunden sind, mittels derer in Abhängigkeit von der Übereinstimmung der Signale aus Rechnerausgang und aus Schaltungsausgang ein Ausgangssignal zur Steuerung der sicherheitsrelevanten Vorrichtung ausgebbar ist.

Die Erfindung geht dabei in einem ersten Schritt von der Überlegung aus, dass sich eine bestimmte Logikoperation, die in einer Rechnereinheit beispielsweise entsprechend einer bestimmten Software ausgeführt wird, relativ kostengünstig durch Hardwarekomponenten nachbilden lässt. In einem zweiten Schritt geht die Erfindung davon aus, dass die Ausfallwahrscheinlichkeit durch einen Common-Mode-Fehler in einer Steuer- und Regeleinheit mit einer Rechnereinheit und einer Schaltungseinheit, die mittels Hardwarekomponenten einen Teil der in der Rechnereinheit durchführbaren Logikoperationen nachbildet, geringer ist, als in einer Steuer- und Regeleinheit mit zwei identischen Rechnereinheiten. Bezüglich der durch Hardwarekomponenten nachgebildeten Logikoperationen treten nämlich keine Common-Mode-Fehler auf.

Bei gleicher Beschaltung ermittelt die Schaltungseinheit aus Eingangssignalen im wesentlichen dasselbe Ausgangssignal wie die Rechnereinheit bei Ausführung der entsprechenden Logikoperation. Die bezüglich der Logikoperation einander entsprechenden Eingänge von Schaltungseinheit und Rechnereinheit sind hierzu jeweils parallel mit einer Signaleingangsleitung verbunden. Im wesentlichen dasselbe Signal bedeutet hierbei, dass die Signalinformationen einander entsprechen. Andere Signalcharakteristiken wie Spannung, Stromstärke, Höhe etc. können verschieden zueinander sein. Bei Übereinstimmung beider Ausgangssignale, d.h. deren Signalinformationen, ist auf eine einwandfreie Funktion der Steuer- und Regeleinheit zu schließen. Hierzu werden die Signale aus Rechnerausgang und aus Schaltungsausgang durch eine Entscheidungseinheit auf Übereinstimmung überprüft, die in Abhängigkeit von dieser Überprüfung ein Ausgangssignal zur Steuerung der sicherheitsrelevanten Vorrichtung ausgibt.

Das von der Entscheidungseinheit ausgegebene Ausgangssignal kann sowohl zur Aktivierung als auch zur Deaktivierung von verschiedenen Funktionen der sicherheitsrelevanten Vorrichtung verwendet werden. So kann bei festgestellter Übereinstimmung beider Signale, d.h. einwandfreier Funktion der Steuer- und Regeleinheit bezüglich der nachgebildeten Logikoperation, durch das Ausgangssignal beispielsweise die Notrutsche in einem Flugzeug ausgelöst werden. Andererseits kann bei übereinstimmenden Signalen aus Rechnereinheit und Schaltungseinheit das ausgegebene Steuersignal auch dazu verwendet werden, das Auslösen eines Mechanismus zu blockieren. Im letzteren Fall kann die Entscheidungseinheit auch so ausgestaltet sein, dass sie ein Ausgangssignal ausgibt, wenn die Signale von Rechnereinheit und Schaltungseinheit nicht übereinstimmen.

Bei der Rechnereinheit kann es sich um einen Mikroprozessor im weitesten Sinne oder um einen sonstigen integrierten Schaltkreis handeln. Die Rechnereinheit zeichnet sich dadurch aus, dass sie durch entsprechende Software in der Lage ist, gewünschte Logikoperationen durchzuführen. Die Schaltungseinheit bildet durch Hardwarekomponenten, d.h. elektronische und elektrische Bauteile, konkrete Logikoperationen fest nach, wobei ein Ausgangssignal mit mehreren oder einem Eingangsignal in der gewünschten Logik verknüpft ist.

Die Erfindung bietet den Vorteil, durch eine Abbildung oder Nachbildung eines Teils der durch eine Rechnereinheit durchführbaren Logikoperationen mittels Hardwarekomponenten kostengünstig Common-Mode-Fehler zu vermeiden. Durch Auswahl derjenigen von der Rechnereinheit durchführbaren Logikoperationen, die in der Schaltungseinheit mittels Hardwarekomponenten nachgebildet sind, kann die Ausfallwahrscheinlichkeit günstig beeinflusst werden.

Von Vorteil ist es, wenn durch die Schaltungseinheit der sicherheitskritische Teil der in der Rechnereinheit durchführbaren Logikoperationen mittels Hardwarekomponenten nachgebildet ist. Auf diese Art und Weise wird die Ausfallwahrscheinlichkeit bezüglich der sicherheitsrelevanten Funktionen verringert und gleichzeitig für diese das Auftreten von Common-Mode-Fehlern sicher vermieden. Andere Funktionen der Rechnereinheit, die als nicht sicherheitskritisch einzustufen sind, müssen nicht zwingend redundant ausgebildet sein.

Die Ausfallwahrscheinlichkeit der Steuer- und Regeleinheit lässt sich weiter verringern, wenn eine Mehrzahl von gleichen Rechnereinheiten, Schaltungseinheiten und Entscheidungseinheiten vorhanden ist, wobei die Rechnereinheiten und Schaltungseinheiten bezüglich der Signalleitungen parallel zueinander geschaltet sind, und wobei die Ausgänge der Entscheidungseinheiten mit einer Logikeinheit verbunden sind, mittels derer in Abhängigkeit von der Übereinstimmung der Ausgangsignale ein Steuersignal zur Steuerung der sicherheitsrelevanten Vorrichtung ausgebbar ist. Diese Ausgestaltung bietet durch das Mehrfach-Vorhandensein von Rechnereinheit, Schaltungseinheit und Entscheidungseinheit eine zusätzliche Ausfallsicherheit sowohl hinsichtlich einer passiven als auch einer aktiven Redundanz. Bei einer passiven Redundanz wird bei Ausfall einer Systemeinheit beispielsweise durch Umschalten auf die funktionierende, übrige Systemeinheit zurückgegriffen. Bei einer aktiven Redundanz werden alle redundant vorhandenen Systemeinheiten durch Parallelschaltung mit denselben Eingangssignalen versorgt. Durch Vergleich der Ausgangssignale aller Systemeinheiten zueinander kann ein Rückschluss auf die Funktionsfähigkeit der einzelnen Systemeinheiten gezogen werden. Bei Ausfall einer Systemeinheit werden deren Ausgangssignale nicht mehr zur Steuerung der sicherheitsrelevanten Vorrichtung herangezogen. Auch kann bei fehlender Übereinstimmung der Ausgangssignale durch ein Warnsignal darauf aufmerksam gemacht werden, dass ein Fehler im System vorliegt, der behoben werden muss.

Bei der angegebenen Ausgestaltung erhalten Schaltungseinheiten hinsichtlich der durch sie nachgebildeten Logikoperationen die gleichen Eingangssignale wie die Rechnereinheiten. Insofern sind diejenigen Logikoperationen, die durch Schaltungseinheiten nachgebildet sind, in gewisser Weise gegenüber den Rechnereinheiten doppelt redundant vorhanden. Durch Vergleich der Ausgangssignale von jeweils einer Schaltungseinheit und jeweils einer Rechnereinheit wird eine hohe Ausfallsicherheit bei gleichzeitiger Vermeidung von Common-Mode-Fehlern erreicht. Die Ausgangssignale der jeweiligen Entscheidungseinheiten, die die Übereinstimmung der Ausgangssignale von jeweils einer Schaltungseinheit und jeweils einer Rechnereinheit überprüfen, werden ihrerseits wiederum durch eine Logikeinheit auf Übereinstimmung überprüft. Hierbei ist es vorstellbar, bei übereinstimmenden Signalen jeweils die sicherheitsrelevante Vorrichtung zu aktivieren oder zu deaktivieren. Stimmen alle Signale überein, kann eine sicherheitsrelevante Aktion durchgeführt werden. Andererseits ist es auch vorstellbar, dass bei nicht übereinstimmenden Signalen, also dem Hinweis auf ein fehlerhaftes System, als Konsequenz eine sicherheitserhaltende Maßnahme aktiviert wird.

Vorteilhafterweise sind die Rechnereinheiten, Schaltungseinheiten und Entscheidungseinheiten in einer ungeraden Anzahl, insbesondere in einer 3-fachen Anzahl, vorhanden, wobei die Logikeinheit zur Ausgabe des Steuersignals gemäß einer Mehrheitsentscheidung bezüglich der Ausgangssignale ausgebildet ist. Im Idealfall aller funktionierenden Systemeinheiten der Steuer- und Regeleinheit liefern die Ausgänge der Entscheidungseinheiten übereinstimmende Signale. Tritt in einem der redundant vorhandenen Systeme ein Fehler auf, so wird das falsche Signal durch die Mehrheitsentscheidung überstimmt. Hierbei muss natürlich vorausgesetzt werden, dass die Wahrscheinlichkeit eines Systemausfalls, bei welchem die Mehrzahl der redundant vorhandenen Systeme gleichzeitig derart ausfallen, dass sie die gleichen falschen Ausgangssignale liefern, vernachlässigbar gering ist. Insofern wird durch die beschriebene Steuer- und Regeleinheit bei unterschiedlichen Ausgangssignalen als Schlussfolgerung die Situation angenommen, die der größten Wahrscheinlichkeit entspricht. Die sicherheitsrelevante Vorrichtung wird per Mehrheitsbeschluss aus den vorliegenden Ausgangssignalen der Entscheidungseinheiten aktiviert oder deaktiviert.

Selbstverständlich können bei allen dargestellten redundanten Architekturen die Rechnereinheiten neben den mittels Schaltungseinheiten nachgebildeten Logikoperationen weitere Logikoperationen durchführen. Für den Kern der hier dargestellten Erfindung ist es dabei irrelevant, inwieweit die Ausgangssignale eventuell mehrfach vorhandener Recheneinheiten hinsichtlich der nicht durch Schaltungseinheiten nachgebildeten Logikoperationen miteinander verglichen, auf Übereinstimmung überprüft oder sonstige Schlüsse daraus gezogen werden.

Zweckmäßigerweise ist eine oder jede Rechnereinheit zur Überprüfung der Signale aus den Schaltungsausgängen und Rechnerausgängen ausgelegt. Auf diese Art und Weise wird ein selbstüberprüfendes System geschaffen, welches selbst Diskrepanzen zwischen den Signalen aus Schaltungsausgang und Rechnerausgang und damit Systemfehler erkennt. Es ist vorstellbar, eine derartige Fehlererkennung dazu zu verwenden, bei einer Entscheidung gemäß Mehrheit diejenigen Signale von vorneherein zur Entscheidung nicht mehr beitragen zu lassen, die gemäß Selbstüberprüfung von einer defekten Systemeinheit stammen.

Ein Ausführungsbeispiel der Erfindung wird anhand einer Zeichnung näher erläutert. Dabei zeigt:

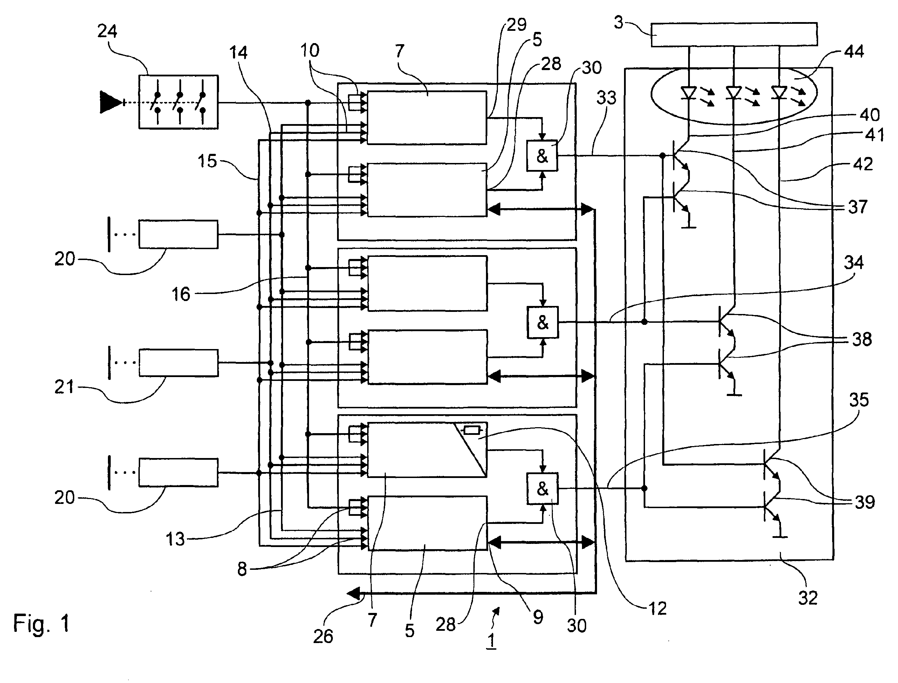

- Figur 1: schematisch den Prinzipaufbau einer Steuer- und Regeleinheit zum Auslösen einer Notrutsche in einem Flugzeug.

In Figur 1 ist der Prinzipaufbau einer Steuer- und Regeleinheit 1 für eine sicherheitsrelevante Vorrichtung 3 gezeigt. Als sicherheitsrelevante Vorrichtung 3 wird der Auslösemechanismus einer Notrutsche in einem Flugzeug gesteuert bzw. geregelt.

Ähnlich wie bei einem Airbag in einem Kraftfahrzeug darf die Notrutsche eines Flugzeugs nur dann ausgelöst werden, wenn ganz spezifische äußere Bedingungen gegeben sind. Beispielsweise muss der Türöffnungswinkel eine bestimmte Größe überschritten haben, da ansonsten die Notrutsche in das Innere des Flugzeugs mit nicht absehbaren Folgen hineingeblasen werden würde. Der Auslösemechanismus für eine Notrutsche gehört damit zu den hochsicherheitsrelevanten Vorrichtungen eines Flugzeugs.

Die gezeigte Steuer- und Regeleinheit 1 ist in 3-facher Redundanz ausgeführt. Sie enthält jeweils 3-fach zur Durchführung von Logikoperationen eine Rechnereinheit 5 sowie eine Schaltungseinheit 7. Jede Rechnereinheit 5 ist als ein programmierbarer Mikroprozessor ausgestaltet, der jeweils eine Anzahl von Rechnereingängen 8 und eine Anzahl von Schnittstellen 9 aufweist. Die Rechnereingänge 8 sind unidirektional zu Einspeisung von Eingangssignalen ausgebildet. Die Schnittstellen 9 sind bidirektional für einen Datenaustausch mit weiteren Systemeinheiten ausgeführt.

Jede Schaltungseinheit 7 weist jeweils unidirektionale Schaltungseingänge 10 auf, über die ebenfalls Eingangssignale eingespeist werden. Durch elektronische Hardwarekomponenten 12 ist in jeder Schaltungseinheit 7 ein Teil der in den Rechnereinheiten 5 durchführbaren Logikoperationen nachgebildet. Mit anderen Worten wird bei gleichen Eingangssignalen die Schaltungseinheit 7 dasselbe Ausgangssignal erzeugen wie die Rechnereinheit 5 entsprechend der nachgebildeten Logikoperation. Auf diese Weise wird hinsichtlich der nachgebildeten Logikoperation eine redundante, ausfallsichere Architektur erzielt, bei welcher zugleich das Auftreten von Common-Mode Fehlern sicher vermieden ist.

In der dargestellten Steuer- und Regeleinheit 1 sind nun diejenigen in der Rechnereinheit 5 durchführbaren Logikoperationen durch Hardwarekomponenten einer Schaltungseinheit 7 nachgebildet, die sicherheitskritisch bezüglich der sicherheitsrelevanten Vorrichtung 3 sind.

Es sind dies die Auswerteoperationen, die abhängig von Sensorsignalen auf den Grad der Türöffnung schließen. Zum Erfassen des Grades der Türöffnung sind 3-fach redundant Näherungssensoren 20, 21 und 22 sowie ein 3-fach redundant ausgestatteter Mikroschalter 24 vorgesehen. Beide Sensortypen, also Näherungs- und Mikroschalter, erfassen den jeweiligen Grad der Türöffnung bzw. das Erreichen des notwendigen Grades der Türöffnung, ab welchem die Notrutsche ausgeblasen werden kann. Die Kontrolle der Türöffnung sowohl durch Näherungssensoren 20, 21 und 22 als auch durch Mikroschalter 24 vermeidet das Auftreten von Common-Mode-Fehlern auf Sensorenebene. Über die Signalleitungen 13, 14, 15 und 16 werden die Messsignale der Näherungssensoren 20, 21 und 22 beziehungsweise des 3-fach redundanten Mikroschalters 24 jeweils den Rechnereingängen 8 und Schaltungseingängen 10 zur Verfügung gestellt. Einander entsprechende Eingänge sind dabei mit denselben Eingangssignalen belegt. Redundant vorhandene Systeme jeweils bestehend aus einer Rechnereinheit 5 und einer Schaltungseinheit 7 sind dabei bezüglich der Eingangssignale parallel geschalten. In jeder dieser Einheiten sind wiederum die Schaltungseinheit 7 und die Rechnereinheit 5 bezüglich der Eingangssignale ebenfalls parallel geschaltet. Jede Rechnereinheit 5 ist weiter über die Schnittstelle 9 über eine Kommunikationsverbindung 26 mit weiteren Systemen in Datenaustausch.

Aus den jeweils 3-fach vorhandenen Signalen der Näherungssensoren 20, 21 und 22 beziehungsweise des 3-fachen Mikroschalters 24 wählt jede Rechnereinheit 5 zunächst durch Vergleich das mindestens 2-fach übereinstimmende Signal zur weiteren Verarbeitung aus. Auch werden zusätzlich die Ausgangssignale des Mikroschalters 24 und der Näherungssensoren 20, 21 und 22 miteinander verglichen. Im Falle unterschiedlicher Ausgangssignale bleiben die Rechnerausgänge 28 und Schaltungsausgänge 29 inaktiv. Man spricht von einem so genannten "Fail-Safe"-Verhalten.

In gleicher Weise entscheidet jede Schaltungseinheit 7 durch Hardwareschaltung per Mehrheit bezüglich der eingehenden Signale der Näherungssensoren 20, 21 und 22 bzw. des 3-fachen Mikroschalters 24.

Aus den Eingangssignalen der Näherungssensoren 20,21 und 22 sowie des Mikroschalters 24 wird letztendlich in jeder Rechnereinheit 5 ein Ausgangssignal errechnet, welches einen Wert für den Grad der Türöffnung darstellt. Auch jede Schaltungseinheit 7 ermittelt durch entsprechende Hardwarekomponenten ein entsprechendes Signal zum Grad der Türöffnung. Über den Rechnerausgang 28 und den Schaltungsausgang 29 jeder Rechnereinheit 5 bzw. jeder Schaltungseinheit 7 werden die auf diese Art und Weise ermittelten Ausgangssignale jeweils einer Entscheidungseinheit 30 zugeleitet. Diese Entscheidungseinheit 30 ermittelt nun den Grad der Übereinstimmung zwischen den Ausgangssignalen aus Rechnerausgang 28 und Schaltungsausgang 29. Liegt Übereinstimmung also identische Signalinformation vor, so gibt jede Entscheidungseinheit 30 ein entsprechendes Ausgangssignal aus, welches einer Logikeinheit 32 zugeleitet wird. Liegt keine Übereinstimmung vor so erzeugt die entsprechende Entscheidungseinheit 30 kein Ausgangssignal. Die Ausgangssignale jeder Entscheidungseinheit 30 werden über die Verbindungsleitungen 33, 34 und 35 der Logikeinheit 32 zugeführt.

In der Logikeinheit 32 wird durch Mehrheitsentscheidung ein Signal zur sicherheitsrelevanten Vorrichtung 3 und damit zur Auslösung der Notrutsche weitergeleitet. Schematisch ist hierbei die Mehrheitslogik durch Transistoren 37, 38 und 39 dargestellt. Zeigen alle 3 Verbindungsleitungen 33, 34 und 35 ein Ausgangssignal, so schalten die Transistoren 37, 38 und 39 sämtlich durch. Als Ausgabesignal werden sämtliche Leitungen 40, 41 und 42 auf Erdpotential gezogen. Wird ein Ausgangssignal nur in den Verbindungsleitungen 33 und 34 erzeugt, so schalten lediglich die Transistoren 37 durch. Infolge wird nur die Leitung 40 auf Erdpotential gezogen. Entsprechendes gilt für die Leitungen 41 und 42 bei übereinstimmenden Ausgangssignalen in den Verbindungsleitungen 34 und 35 bzw. 33 und 35.

Ist eine der Leitungen 40, 41 und 42 auf Erdpotential gezogen, so wird in der Vorrichtung 3 die Notrutsche gemäß Mehrheitsentscheidung ausgelöst. Zur Anzeige, ob mindestens 2 der Leitungen 40, 41 und 42 auf Erdpotential liegen, ist eine Leuchtdiodenanzeige 44 vorgesehen.

### Bezugszeichenliste

- 1: Steuer- und Regeleinheit
- 3: sicherheitsrelevante Vorrichtung
- 5: Rechnereinheit
- 7: Schaltungseinheit
- 8: Rechnereingänge
- 9: Schnittstelle
- 10: Schaltungseingänge
- 12: Hardwarekomponenten
- 13, 14, 15, 16: Signalleitung
- 20,21,22: Näherungssensor
- 24: Mikroschalter
- 26: Kommunikationsverbindung
- 28: Rechnerausgang
- 29: Schaltungsausgang
- 30: Entscheidungseinheit
- 32: Logikeinheit
- 33, 34, 35: Verbindungsleitung
- 37, 38, 39: Transistoren
- 40, 41, 42: Leitungen
- 44: LED-Anzeige

## Patentansprüche

1. Steuer- und Regeleinheit (1) für eine sicherheitsrelevante Vorrichtung (3), insbesondere in der Luftfahrt, mit einer Rechnereinheit (5) mit einer Anzahl von Rechnereingängen (8) und Rechnerausgängen (28) und mit einer Schaltungseinheit (7) mit einer Anzahl von Schaltungseingängen (10) und Schaltungsausgängen (29),
**dadurch gekennzeichnet,**
**dass** die Schaltungseinheit (7) mittels Hardwarekomponenten (12) einen Teil der in der Rechnereinheit (5) durchführbaren Logikoperationen nachbildet, wobei einander bezüglich der nachgebildeten Logikoperationen entsprechende Schaltungseingänge (10) und Rechnereingänge (8) jeweils parallel mit einer Signaleingangsleitung (13, 14, 15, 16) verbunden sind, und wobei einander bezüglich der nachgebildeten Logikoperationen entsprechende Rechnerausgänge (28) und Schaltungsausgänge (29) jeweils mit einer Entscheidungseinheit (30) verbunden sind, mittels derer in Abhängigkeit von der Übereinstimmung der Signale aus Rechnerausgang (28) und aus Schaltungsausgang (29) ein Ausgangssignal zur Steuerung der sicherheitsrelevanten Vorrichtung (3) ausgebbar ist.

2. Steuer- und Regeleinheit (1) nach Anspruch 1,
wobei durch die Schaltungseinheit (7) der sicherheitskritische Teil der in der Rechnereinheit (5) durchführbaren Logikoperationen mittels Hardwarekomponenten (12) nachgebildet ist.

3. Steuer- und Regeleinheit (1) nach Anspruch 1 oder 2,
wobei eine Mehrzahl von gleichen Rechnereinheiten (5), Schaltungseinheiten (7) und Entscheidungseinheiten (30) vorhanden ist, wobei die Rechnereinheiten (5) und Schaltungseinheiten (7) bezüglich der Signalleitungen (13, 14, 15, 16) parallel zueinander geschaltet sind, und wobei die Ausgänge der Entscheidungseinheiten (30) mit einer Logikeinheit (32) verbunden sind, mittels derer in Abhängigkeit von der Übereinstimmung der Ausgangssignale ein Steuersignal zur Steuerung der sicherheitsrelevanten Vorrichtung (3) ausgebbar ist.

4. Steuer- und Regeleinheit (1) nach Anspruch 3,
wobei die Rechnereinheiten (5), Schaltungseinheiten (7) und Entscheidungseinheiten (30) in einer ungeraden Anzahl, insbesondere dreifach, vorhanden sind, und wobei die Logikeinheit (32) zur Ausgabe des Steuersignals gemäß einer Mehrheitsentscheidung bezüglich der Ausgangssignale ausgebildet ist.

5. Steuer- und Regeleinheit (1) nach einem der Ansprüche 1 bis 4,
wobei eine oder jede Rechnereinheit (5) zur Überprüfung der Signale aus den Schaltungsausgängen (29) und den Rechnerausgängen (28) ausgelegt ist.

## Claims

1. Open-loop and closed-loop control unit (1) for a safety-relevant apparatus (3), in particular for aviation, having a computer unit (5) with a number of computer inputs (8) and computer outputs (28), and having a circuit unit (7) with a number of circuit inputs (10) and circuit outputs (29), **characterized in that** the circuit unit (7) uses hardware components (12) to simulate some of the logic operations which can be carried out in the computer unit (5), wherein circuit inputs (10) and computer inputs (8) which correspond to one another with respect to the simulated logic operations are each connected in parallel to a signal input line (13, 14, 15, 16), and wherein computer outputs (28) and circuit outputs (29) which correspond to one another with respect to the simulated logic operations are each connected to a decision-making unit (30), by means of which an output signal for open-loop control of the safety-relevant apparatus (3) can be emitted as a function of the correspondence between the signals from the computer output (28) and from the circuit output (29).

2. Open-loop and closed-loop control unit (1) according to Claim 1,
wherein the safety-critical portion of the logic operations which can be carried out in the computer unit (5) is simulated by the circuit unit (7) by means of hardware components (12).

3. Open-loop and closed-loop control unit (1) according to Claim 1 or 2,
wherein two or more identical computer units (5), circuit units (7) and decision-making units (30) are provided, wherein the computer units (5) and the circuit units (7) are connected in parallel with one another with respect to the signal lines (13, 14, 15, 16) and wherein the outputs of the decision-making units (30) are connected to a logic unit (32) by means of which an open-loop control signal for open-loop control of the safety-relevant apparatus (3) can be emitted as a function of the correspondence between the output signals.

4. Open-loop and closed-loop control unit (1) according to Claim 3,
wherein there are an odd number (in particular three) of the computer units (5), circuit units (7) and decision-making units (30), and wherein the logic unit (32) is designed to emit the open-loop control signal on the basis of a majority decision with respect to the output signals.

5. Open-loop and closed-loop control unit (1) according to one of Claims 1 to 4,
wherein one or each computer unit (5) is designed to check the signals from the circuit outputs (29) and from the computer outputs (28).

## Revendications

1. Unité de commande et de régulation (1) pour un dispositif en rapport avec la sécurité (3), notamment en navigation aérienne, comprenant une unité de calcul (5) munie d'une pluralité d'entrées de calcul (8) et de sorties de calcul (28) et comprenant une unité de commutation (7) munie d'une pluralité d'entrées logiques (10) et de sorties logiques (29), **caractérisée en ce que** l'unité de commutation (7) simule au moyen de composants physiques (12) une partie des opérations logiques pouvant être effectuées dans l'unité de calcul (5), les entrées logiques (10) et les entrées de calcul (8) correspondant les unes aux autres du point de vue des opérations logiques simulées étant respectivement reliées en parallèle avec une ligne d'entrée de signal (13, 14, 15, 16), et les sorties de calcul (28) et les sorties logiques (29) correspondant les unes aux autres du point de vue des opérations logiques simulées étant respectivement reliées à une unité de décision (30) au moyen de laquelle peut être délivré un signal de sortie destiné à commander le dispositif en rapport avec la sécurité (3) en fonction de la concordance des signaux provenant de la sortie de calcul (28) et de la sortie logique (29).

2. Unité de commande et de régulation (1) selon la revendication 1, la partie critique pour la sécurité des opérations logiques pouvant être effectuées dans l'unité de calcul (5) étant simulée au moyen de composants physiques (12) par l'unité de commutation (7).

3. Unité de commande et de régulation (1) selon la revendication 1 ou 2, une pluralité d'unités de calcul (5), d'unités de commutation (7) et d'unités de décision (30) identiques étant présentes, les unités de calcul (5) et les unités de commutation (7) étant branchées parallèlement les unes aux autres par rapport aux lignes de signal (13, 14, 15, 16) et les sorties des unités de décision (30) étant reliées avec une unité logique (32) au moyen de laquelle peut être délivré un signal de commande destiné à commander le dispositif en rapport avec la sécurité (3) en fonction de la concordance des signaux de sortie.

4. Unité de commande et de régulation (1) selon la revendication 3, les unités de calcul (5), unités de commutation (7) et unités de décision (30) étant présentes dans un nombre impair, notamment en triple, et l'unité logique (32) étant configurée pour délivrer le signal de commande conformément à une décision majoritaire concernant les signaux de sortie.

5. Unité de commande et de régulation (1) selon l'une quelconque des revendications 1 à 4, une ou chacune des unités de calcul (5) étant conçue pour contrôler les signaux provenant des sorties logiques (29) et des sorties de calcul (28).
